(19) Europäisches Patentamt / European Patent Office / Office européen des brevets

(11) **EP 2 458 390 B1**

(12) **FASCICULE DE BREVET EUROPEEN**

(45) Date de publication et mention
de la délivrance du brevet:
**07.05.2014 Bulletin 2014/19**

(51) Int Cl.:
*G01P 5/24* *(2006.01)*      *G01S 11/14* *(2006.01)*
*G01F 1/66* *(2006.01)*

(21) Numéro de dépôt: **11185876.7**

(22) Date de dépôt: **20.10.2011**

(54) **Procédé et dispositif de mesure acoustique asservi à la vitesse pour la caractérisation d'un flux**

Verfahren und Vorrichtung zur geschwindigkeitsabhängigen akustischen Messung zur Charakterisierung eines Flusses

Method and device for acoustic measurement slaved to speed for characterising a flow

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2010 FR 1059758**

(43) Date de publication de la demande:
**30.05.2012 Bulletin 2012/22**

(73) Titulaire: **Pulsonic**
**91400 Orsay (FR)**

(72) Inventeurs:
• **Grandidier, Eric**
**92160 Antony (FR)**
• **Zhan, Francis**
**92130 Issy les Moulineaux (FR)**
• **Collet, Gérard**
**91440 Bures sur Yvette (FR)**

(74) Mandataire: **Pontet Allano & Associes**
**Parc Les Algorithmes, Bâtiment Platon**
**CS 70003 Saint Aubin**
**91192 Gif sur Yvette Cedex (FR)**

(56) Documents cités:
**EP-A2- 0 272 942     GB-A- 2 187 839**
**US-A- 5 343 744     US-A1- 2004 267 464**

## Description

### Domaine technique

La présente invention concerne un procédé de mesure par onde acoustique pour la caractérisation d'un flux.

Elle concerne aussi un dispositif de mesure pour la mise en oeuvre d'un tel procédé.

### Etat de la technique antérieure

Le principe de la mesure par onde acoustique pour la caractérisation d'un flux est connu depuis les années 1960. Ce principe est notamment présenté dans l'article scientifique: Cruette, D., A. Marillier, J. L. Dufresne, et J. Y. Grandpeix, 2000: Fast temperature and true airspeed measurements with the airborne ultrasonic anemometer thermometer. American Meteorological society, 1021-1039.

En utilisant des émetteurs et des récepteurs d'ondes ultrasonores il est possible de mesurer les temps de vols d'ondes ultrasonores. En mesurant le temps de vol d'ondes ultrasonores entre deux couples de transducteurs ultrasonores, alternativement émetteurs et récepteurs d'ondes ultrasonores, il est possible de déterminer les temps de vol d'ondes ultrasonores dans les deux sens de propagation. On en déduit par différence entre ces deux temps de vols la vitesse du flux dans la direction définie par les deux transducteurs.

Le temps de vol dépend de la distance entre les transducteurs, de la célérité de l'onde et de la vitesse du flux. En mesurant la vitesse du flux dans plusieurs directions, il est possible d'en déduire la vitesse absolue du flux, ainsi que son orientation. Ce principe permet également de déterminer la température du flux.

On connaît le document US 2004/0267464 qui divulgue un débitmètre mettant en oeuvre deux transducteurs entre lesquels se propage une onde ultrasonique. Selon ce document, on cherche à diminuer une consommation énergétique du débitmètre. Pour cela, on calcule des écarts-types de mesures de débit précédentes pour modifier ou non un taux de répétition d'impulsions de l'onde ultrasonique.

On connait également le document US 5,343,744 qui décrit un anémomètre ultrasonique comprenant trois transducteurs ultrasoniques disposés entre eux de manière à former un triangle équilatéral horizontal.

Un seul des transducteurs émet un signal acoustique pendant que les deux autres transducteurs reçoivent le signal. Les transducteurs remplissent successivement le rôle d'émetteur ou de récepteur de signal. Un circuit électronique permet de générer différentes ondes acoustiques puis de les combiner pour obtenir une représentation vectorielle de la vitesse et de l'orientation du vent.

L'utilisation des ultrasons est particulièrement intéressante pour la caractérisation de flux, puisqu'un seul dispositif de mesure suffit à remplir le rôle d'anémomètre, de girouette, ainsi que de thermomètre.

Contrairement aux dispositifs mécaniques classiques, tels que les anémomètres à coupelles ou à hélice, ces dispositifs n'ont pas de pièce mobile. La réponse aux variations des caractéristiques du flux est ainsi plus rapide. Comparativement aux dispositifs mécaniques, les dispositifs à ultrasons ne nécessitent pratiquement aucun entretien et ont une durée de vie supérieure. Les dispositifs de mesure par ultrasons sont donc tout particulièrement adaptés pour être placés dans les endroits difficiles d'accès ou isolés.

Toutefois les dispositifs existants ont pour inconvénient une forte consommation énergétique. Plus la vitesse du flux est élevée, plus il faut un nombre important d'impulsions acoustiques pour obtenir une mesure valide, et plus ces impulsions doivent être puissantes. Le nombre et la puissance des impulsions acoustiques sont donc constants et déterminés en fonction de la vitesse maximale du flux devant être mesurée.

La mise en oeuvre des dispositifs existants impose donc, soit d'amener du courant électrique depuis le secteur lorsque cela est possible, soit pour les dispositifs isolés de disposer à proximité un groupe électrogène qu'il faut alimenter régulièrement en carburant.

Un but de la présente invention est de proposer un procédé et dispositif de mesure acoustique de consommation énergétique plus faible que les procédés et dispositifs actuels.

### Exposé de l'invention

L'invention permet d'atteindre ce but avec un procédé et un dispositif de mesure par onde acoustique, pour la caractérisation d'un flux à un instant donné, selon les revendications 1 et 8.

Pour la plupart des applications des procédés de mesure par ondes acoustiques, la vitesse de flux varie de manière sensiblement continue au cours du temps. Dès lors que l'on connait la vitesse de flux à un instant t donné, la vitesse de flux sera donc sensiblement voisine à l'instant t+1 suivant. Il n'est donc pas nécessaire à l'instant t+1 d'utiliser une onde correspondant à la vitesse de flux maximale pouvant être mesurée. Il est seulement nécessaire, à l'instant t+1, que l'onde corresponde à la vitesse de flux à l'instant t, ou à une vitesse de flux sensiblement supérieure. Le procédé selon l'invention permet ainsi d'adapter l'onde acoustique à la vitesse du flux, et ainsi de diminuer la consommation énergétique pour la caractérisation d'un flux.

Selon l'invention l'onde acoustique peut comprendre au moins une impulsion acoustique. Ainsi, le procédé selon l'invention permet d'adapter le nombre d'impulsions acoustiques à la vitesse de flux à l'instant t, ou à une vitesse de flux sensiblement supérieure.
Le procédé selon l'invention permet ainsi de diminuer grandement le nombre d'impulsions acoustiques, et ainsi la consommation énergétique pour la caractérisation d'un flux.

Selon un aspect important de l'invention, l'énergie électrique pour générer l'onde acoustique est adaptée selon la vitesse du flux, plus particulièrement en tension et/ou courant et/ou durée des impulsions. En diminuant la tension, on diminue l'amplitude des impulsions acoustiques. La tension est adaptée de manière à ce que cette amplitude à l'instant t+1 corresponde à la vitesse de flux à l'instant t, ou à une vitesse de flux sensiblement supérieure. Cette tension est inférieure à la tension correspondant à la vitesse de flux maximale pouvant être mesurée. Le procédé selon l'invention permet ainsi de diminuer encore la consommation énergétique mise en oeuvre pour la caractérisation d'un flux.

De préférence la mesure pour la caractérisation d'un flux peut comprendre la mesure de vitesse du flux et/ou de température du flux et/ou d'orientation du flux.

Selon l'invention, les impulsions acoustiques sont émises par salves. La mesure par salves successives, éventuellement espacées dans le temps, permet de diminuer la consommation énergétique.

L'invention comprend également un calcul d'un taux de mesures de temps de vols valides pour une salve. Le taux de mesures de temps de vols valides correspond au rapport entre un nombre de mesures de temps de vols valides et le nombre d'impulsions acoustiques de la salve. Les mesures de temps de vols valides sont sélectionnées parmi les mesures de la salve comme ayant une probabilité suffisante d'être valides, notamment en ne tenant pas compte des valeurs aberrantes.

Selon l'invention, le nombre d'impulsions acoustiques de chaque salve peut être calculé pour chaque nouvelle salve à partir du taux de mesures de temps de vols valides de la salve précédente.
Le taux de mesures de temps de vols valides peut varier selon différents paramètres tels que les perturbations aérodynamiques du flux ou encore la quantité de particules en suspension dans le flux, par exemple la quantité d'hydrométéores, etc. Le taux de mesures de temps de vols valides entre deux salves successives varie peu, en particulier lorsque le flux varie de manière sensiblement continue. Il est donc possible d'adapter le nombre d'impulsions en fonction du taux de mesures de temps de vols valides, estimé à partir du taux de mesures de temps de vols valides de la salve précédente. Pour de faibles vitesses de vent, le Taux de Mesures de Temps Vols Valides par salves est élevé. Le procédé selon l'invention permet ainsi d'obtenir un nombre suffisant de mesures de temps de vols valides, et de diminuer la quantité d'énergie nécessaire à la mesure.

L'invention peut également comprendre un calcul de l'amplitude de la tension des impulsions acoustiques pour chaque nouvelle salve à partir d'une vitesse de flux déterminée par la salve précédente. L'invention ne nécessite pas de dispositif accessoire consommateur d'énergie pour fournir une estimation de la vitesse de flux. L'utilisation de la vitesse de flux déterminée par la salve précédente pour un flux variant de manière sensiblement continue permet un calcul fiable de l'amplitude de tension nécessaire.

Avantageusement, le procédé selon l'invention peut être initialisé par définition d'une amplitude de tension initiale et d'un nombre initial d'impulsions acoustiques.

Selon un aspect préférentiel du procédé selon l'invention, le flux caractérisé est le vent.

Le dispositif mettant en oeuvre le procédé selon l'invention permet de diminuer grandement la consommation énergétique nécessaire à la mise en oeuvre de la mesure. Il devient dès lors possible de mettre en oeuvre l'invention à l'aide de dispositifs alimentés par batterie, éventuellement complétés par des générateurs électriques de faible puissance tels que par exemple des panneaux solaires.

Dans une version particulière du dispositif selon l'invention, les moyens émetteurs et les moyens récepteurs d'impulsions acoustiques peuvent comprendre trois émetteurs-récepteurs d'onde acoustique. En minimisant le nombre d'émetteurs-récepteurs, l'invention permet de minimiser la consommation énergétique du dispositif.

Avantageusement, les trois émetteurs-récepteurs d'onde acoustique peuvent être équidistants dans un même plan de mesure.

En particulier, le dispositif selon l'invention peut comprendre un trident composé de trois dents solidaires d'un corps, une extrémité libre de chaque dent portant un émetteur-récepteur d'onde acoustique.

Les moyens de calcul peuvent comprendre un calculateur, un appareil électronique et/ou un ordinateur.

## Description des figures et modes de réalisation

D'autres avantages et particularités de l'invention apparaîtront à la lecture de la description détaillée de mises en oeuvre et de modes de réalisation nullement limitatifs, et des dessins annexés suivants :

- la figure 1 est une vue en perspective d'un mode de réalisation privilégié du dispositif selon l'invention;
- la figure 2 est un diagramme représentant un exemple de procédé selon l'invention; et
- la figure 3 est un diagramme représentant un exemple de calcul du nombre d'impulsions acoustiques en fonction du taux de mesures de temps de vol valides.

Dans les exemples particuliers et nullement limitatifs qui seront décrits dans la suite le flux caractérisé est le vent.

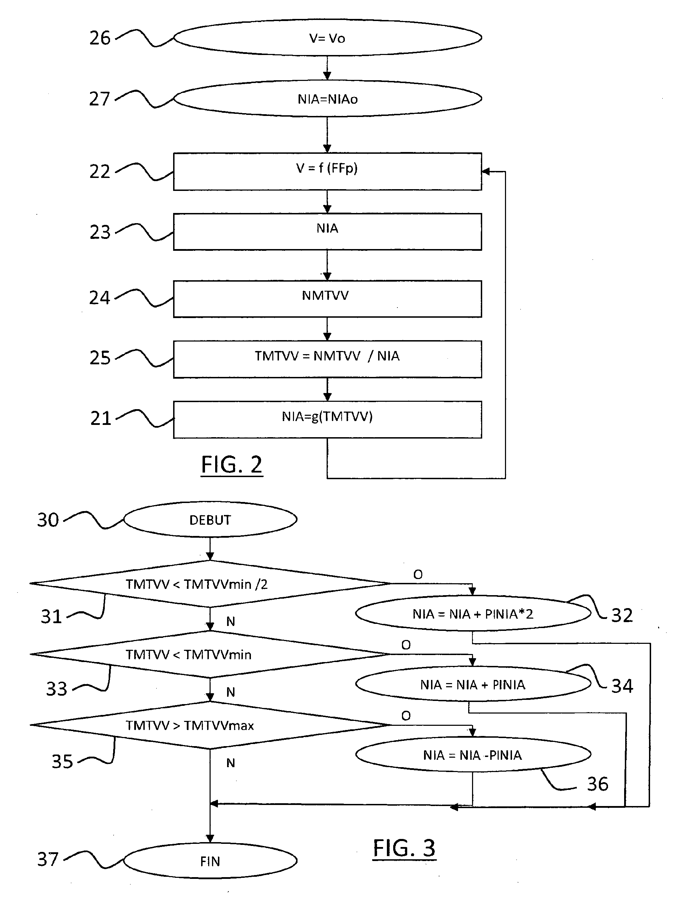

On va tout d'abord décrire, en référence à la figure 2, un procédé de mesure par impulsions acoustiques selon l'invention. Pour émettre une onde acoustique comprenant des impulsions acoustiques, on détermine lors d'une étape 21 un nombre d'impulsions acoustiques NIA selon une fonction g d'un taux de mesures de temps de vols valides TMTVV préalablement mesuré. Le taux de mesures de temps de vol valides dépend des turbulences liées à une vitesse du flux FF. Ainsi le nombre d'impulsions acoustiques est adapté en fonction d'une vitesse du flux précédente FFp préalablement mesurée.

Les impulsions acoustiques sont générées par un moyen générateur. Ces impulsions acoustiques ont une amplitude qui dépend d'une tension électrique V appliquée au moyen générateur. Pour adapter l'amplitude des impulsions acoustiques selon la vitesse du flux, on adapte donc lors d'une étape 22 la tension V selon une fonction f de la vitesse du flux précédente FFp.

Dans un mode de réalisation privilégié de l'invention, on considère différentes gammes successives de vitesse de flux. La fonction f associe à chacune de ces gammes une tension V différente. L'amplitude de tension correspond donc à la tension V associée à la gamme comprenant la vitesse du flux précédente FFp.

Le nombre et l'amplitude des impulsions acoustiques déterminés permettent de définir une salve d'impulsions acoustiques. Cette salve est émise lors d'une étape 23 du procédé de la figure 2.

Les temps de vol entre l'émission et la réception des impulsions acoustiques sont analysés pour caractériser le flux.

Cette caractérisation se fait par la mesure des caractères essentiels du flux, à savoir la vitesse du flux FF, l'orientation et la température du flux.

En considérant un temps de vol aller T1, et un temps de vol retour T2 entre deux transducteurs sur une distance l connue séparant les transducteurs, on calcule T1 et T2 en fonction de la célérité du son c, plus ou moins la vitesse du vent selon son sens de parcours par rapport à la propagation de l'onde ultrasonique.

$$T_1 = \frac{l}{c + v}$$

$$T_2 = \frac{l}{c - v}$$

La caractérisation du flux est réalisée par calcul à partir de la mesure des temps de vol pour obtenir la vitesse du vent et la célérité du son.

$$v = \frac{l}{2}\left(\frac{1}{T_1} - \frac{1}{T_2}\right)$$

$$c = \frac{l}{2}\left(\frac{1}{T_1} + \frac{1}{T_2}\right)$$

Dans un mode de réalisation on a:

$$c = 331{,}3\sqrt{1 + \frac{\theta}{273{,}15}}$$

$$\theta = 273.15x\left[\left(\frac{c}{331.3}\right)^2 - 1\right]$$

Avec: $\theta$ température de l'air en °C

T1 temps de vol aller en secondes
T2 temps de vol retour en secondes c célérité du son en m/s
v : vitesse du vent selon la direction de propagation de l'onde ultrasonique
1 : distance entre les transducteurs

A chaque impulsion acoustique correspond une mesure de temps de vol. L'analyse de chaque salve comprend de préférence une sélection des mesures valides parmi les mesures de la salve pour déterminer dans une étape 24 un nombre de mesures de temps de vols valides NMTVV. Cette sélection est effectuée en particulier en ne tenant pas compte des mesures donnant des valeurs impossibles.

Lorsque le flux considéré est un vent, la gamme de température qui est typiquement comprise entre -70°C et +85°C, et la gamme de vitesse mesurée est typiquement comprise entre 0 m/s et 100m/s. Les impulsions acoustiques sont mesurées sur une distance connue, de sorte que toute mesure correspondant à des valeurs en dehors de ces gammes est considérée comme non valide lorsque le flux considéré est le vent.

Dans un mode de réalisation privilégié de l'invention, la sélection est effectuée en ne tenant pas compte des mesures dont la valeur est trop éloignée d'une valeur médiane des mesures de la salve.

La sélection peut également ou alternativement ne pas tenir compte des premières et dernières mesures de chaque salve pour améliorer la fiabilité de mesure.

Lors de l'étape 24 la vitesse de flux précédente FFp est redéfinie comme étant égale à la vitesse de flux FF venant d'être mesurée.

Dans une étape 25, le taux de mesures de temps de vols valides est calculé pour une salve comme le rapport entre un nombre de mesures de temps de vols valides et le nombre d'impulsions acoustiques de la salve.

Le nombre d'impulsions acoustiques de chaque salve est de préférence calculé pour chaque nouvelle salve à partir du taux de mesures de temps de vols valides de la salve précédente. L'étape 25 est donc de préférence suivie de l'étape 21.

De préférence le procédé est initialisé par définition d'une amplitude de tension initiale Vo et d'un nombre initial d'impulsions acoustiques NIAo lors de deux étapes 26 et 27 respectives. Les étapes 26 et 27 d'initialisation permettent une première occurrence de l'étape 22 de calcul de la puissance acoustique.

Dans l'exemple représenté à la figure 3, la fonction g permet le calcul du nombre d'impulsions acoustiques NIA en fonction du taux de mesures de temps de vol valides TMTVV.

L'étape 30 intitulée "DEBUT" correspond au démarrage de la fonction g. Dans l'exemple de la figure 2, l'étape 30 correspond à l'étape 25 de calcul du taux de mesure de temps de vols valides TMTVV.

Suite à l'étape 30, on compare lors d'une étape 31 le taux de mesure de temps de vols valides TMTVV à la moitié d'un taux de mesures de temps de vols valides minimum TMTVVmin prédéterminé.

Si l'inégalité TMTVV < TMTVVmin /2 est vérifiée, c'est-à-dire si le taux de mesure de temps de vols valides TMTVV est inférieur à la moitié du taux de mesures de temps de vols valides minimum TMTVVmin, on passe à une étape 32. L'étape 32 correspond à la définition du nombre d'impulsions acoustiques NIA comme la somme du nombre d'impulsions acoustiques NIA de la salve précédente et du double d'un pas d'incrémentation du nombre d'impulsions acoustiques PINIA. Suite à l'étape 32 on passe à une étape 37.

Si l'inégalité TMTVV < TMTVVmin /2 n'est pas vérifiée, c'est-à-dire si le taux de mesure de temps de vols valides TMTVV est supérieur à la moitié du taux de mesures de temps de vols valides minimum TMTVVmin, on passe à une étape 33.

On compare lors d'une étape 33 le taux de mesure de temps de vols valides TMTVV au taux de mesures de temps de vols valides minimum TMTVVmin.

Si l'inégalité TMTVV < TMTVVmin est vérifiée, c'est-à-dire si le taux de mesure de temps de vols valides TMTVV est inférieur au taux de mesures de temps de vols valides minimum TMTVVmin, on passe à une étape 34. L'étape 34 correspond à la définition du nombre d'impulsions acoustiques NIA comme la somme du nombre d'impulsions acoustiques NIA de la salve précédente et du pas d'incrémentation du nombre d'impulsions acoustiques PINIA. Suite à l'étape 34 on passe à l'étape 37.

Si l'inégalité TMTVV < TMTVVmin n'est pas vérifiée, c'est-à-dire si le taux de mesure de temps de vols valides TMTVV est supérieur au taux de mesures de temps de vols valides minimum TMTVVmin, on passe à une étape 35.

On compare lors d'une étape 35 le taux de mesure de temps de vols valides TMTVV à un taux de mesures de temps de vols valides maximum TMTVVmax prédéterminé.

Si l'inégalité TMTVV > TMTVVmax est vérifiée, c'est-à-dire si le taux de mesure de temps de vols valides TMTVV est supérieur au taux de mesures de temps de vols valides maximum TMTVVmax, on passe à une étape 36. L'étape 36 correspond à la définition du nombre d'impulsions acoustiques NIA comme la différence du nombre d'impulsions acoustiques NIA de la salve précédente et du pas d'incrémentation du nombre d'impulsions acoustiques PINIA. Suite à l'étape 36 on passe à l'étape 37.

Si l'inégalité TMTVV > TMTVVmax n'est pas vérifiée, c'est-à-dire si le taux de mesure de temps de vols valides TMTVV est supérieur au taux de mesures de temps de vols valides maximum TMTVVmax, on passe à l'étape 37.

L'étape 37 intitulée "FIN" correspond à la fin de la fonction g. Dans l'exemple de la figure 2, l'étape 37 correspond à l'étape 22 de calcul de la tension V.

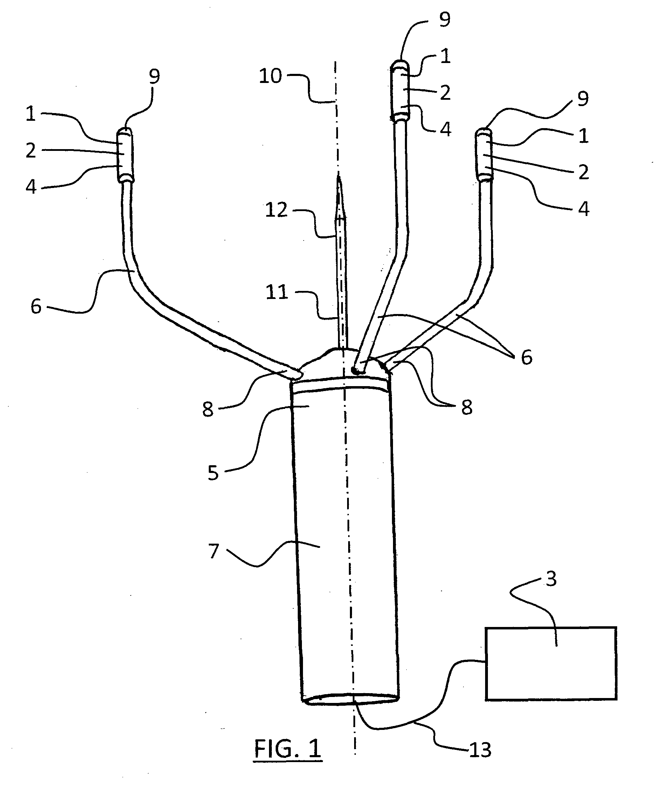

Le dispositif de mesure par impulsions acoustiques pour la caractérisation d'un flux, représenté à la figure 1, comprend des moyens émetteurs 1 et des moyens récepteurs 2 d'impulsions acoustiques. Le dispositif comprend en outre des moyens de calcul 3 pour calculer le nombre d'impulsions acoustiques NIA selon une vitesse dudit flux préalablement mesurée FFp.

Dans un mode de réalisation préférentiel, les moyens émetteurs 1 et les moyens récepteurs 2 d'impulsions acoustiques comprennent trois émetteurs-récepteurs d'impulsions acoustiques 4, autrement appelés transducteurs.

De préférence les trois émetteurs-récepteurs d'impulsions acoustiques sont équidistants entre eux dans un même plan de mesure. La distance entre les émetteurs-récepteurs est connue.

Dans l'exemple représenté, le dispositif comprend un trident 5 composé de trois dents 6. Chaque dent comprend une extrémité 8 solidaire d'un corps 7.

Une extrémité libre 9 de chaque dent porte un émetteur-récepteur d'impulsions acoustiques.

Les trois dents sont de préférence régulièrement réparties autour d'un axe de révolution 10 du corps 7.

Le plan de mesure est de préférence choisi normal à l'axe de révolution. L'orthocentre du triangle formé par les trois transducteurs est de préférence placé sur l'axe de révolution.

Des moyens de protection 11 assurent la protection du dispositif face aux oiseaux. Les moyens de protection comprennent de préférence au moins une pique 12 empêchant les oiseaux de se poser sur le dispositif. Les moyens de protection comprennent de préférence une pique 12 ayant pour axe l'axe de révolution 10.

Les moyens de calcul 3 comprennent de préférence un appareil électronique et/ou un ordinateur relié aux moyens émetteurs 1 et aux moyens récepteurs 2 par au moins un fil 13.

Bien sûr, l'invention n'est pas limitée aux exemples qui viennent d'être décrits et de nombreux aménagements peuvent être apportés à ces exemples sans sortir du cadre de l'invention.

Le flux considéré peut être d'autre nature que le vent. En particulier le flux peut désigner tout flux de substances ou mélanges aptes à être mesurés par impulsions acoustiques.

**Revendications**

1. Procédé de mesure par onde acoustique pour la caractérisation d'un flux à un instant donné, mettant en oeuvre des déterminations de temps de vol d'ondes ultrasonores entre deux transducteurs, dans lequel l'onde acoustique comprend au moins une impulsion acoustique, **caractérisé en ce que**

   - les impulsions acoustiques sont émises (23) par salves,
   - on calcule un taux de mesures de temps de vol valides (24) pour une salve comme le rapport entre un nombre de mesures de temps de vol valides et un nombre d'impulsions acoustiques de la salve, les mesures de temps de vol valides étant sélectionnées parmi les mesures de la salve en ne tenant pas compte des valeurs aberrantes,
   - on calcule le nombre d'impulsions acoustiques de chaque salve (21) pour chaque nouvelle salve à partir du taux de mesures de temps de vol valides de la salve précédente, de façon à adapter l'onde acoustique selon le taux de mesures de temps de vol valides lié à une vitesse dudit flux à un instant précédent.

2. Procédé selon la revendication 1, **caractérisé en ce que** l'énergie électrique pour générer l'onde acoustique est adaptée (22) selon la vitesse du flux, plus particulièrement en tension et/ou courant et/ou durée des impulsions.

3. Procédé selon la revendication 2, **caractérisé en ce que** l'énergie électrique pour générer l'onde acoustique est adaptée en tension (22) selon la vitesse du flux, de façon à adapter l'amplitude des impulsions acoustiques selon la vitesse du flux.

4. Procédé selon l'une des revendications précédentes, **caractérisé en ce que** la mesure pour la caractérisation d'un flux comprend la mesure de vitesse du flux et/ou de température du flux et/ou d'orientation du flux.

5. Procédé selon l'une des revendications précédentes, **caractérisé en ce que** l'amplitude de la tension électrique pour générer des impulsions acoustiques est calculée (22) pour chaque nouvelle salve à partir d'une vitesse de flux déterminée par la salve précédente.

6. Procédé selon l'une des revendications précédentes, **caractérisé en ce que** le procédé est initialisé par définition d'une amplitude de tension initiale (26) et d'un nombre initial d'impulsions acoustiques (27).

7. Procédé selon l'une des revendications précédentes, **caractérisé en ce que** le flux caractérisé est le vent.

8. Dispositif de mesure par onde acoustique pour la caractérisation d'un flux à un instant donné, comprenant des moyens émetteurs (1) et des moyens récepteurs (2) d'onde acoustique et des moyens de détermination de temps de vol d'ondes ultrasonores entre les moyens émetteurs (1) et les moyens récepteurs(2), **caractérisé en ce que**

   - les moyens émetteurs (1) sont agencés pour émettre des impulsions acoustiques par salves
   - il comprend en outre des moyens de calcul (3) qui sont agencés pour

      ○ calculer un taux de mesures de temps de vol valides pour une salve comme le rapport entre un nombre de mesures de temps de vol valides et un nombre d'impulsions acoustiques de la salve, les mesures de temps de vol valides étant sélectionnées parmi les mesures de la salve en ne tenant pas compte des valeurs aberrantes,
      ○ calculer un nombre d'impulsions acoustiques de chaque salve pour chaque nouvelle salve à partir du taux de mesures de temps de vol valides de la salve précédente, de façon à adapter l'onde acoustique selon le taux de mesures de temps de vol valides lié à une vitesse dudit flux à un instant précédent.

9. Dispositif selon la revendication 8, **caractérisé en ce que** les moyens émetteurs (1) et les moyens récepteurs (2) d'onde acoustique comprennent trois émetteurs-récepteurs d'onde acoustique (4).

10. Dispositif selon la revendication 9, **caractérisé en ce que** les trois émetteurs-récepteurs d'onde acoustique (4) sont équidistants dans un même plan de mesure.

11. Dispositif selon la revendication 9 ou 10, **caractérisé en ce qu'**il comprend un trident (5) composé de trois dents (6) solidaires d'un corps (7), une extrémité libre (9) de chaque dent portant un émetteur-récepteur d'onde acoustique.

12. Dispositif selon l'une des revendications 8 à 11, **ca-**

**ractérisé en ce que** les moyens de calcul (3) comprennent un appareil électronique et/ou un ordinateur.

**Patentansprüche**

1. Verfahren zur Messung durch Schallwellen bei der Charakterisierung eines Flusses zu einem gegebenen Zeitpunkt, bei dem Bestimmungen der Laufzeit von Ultraschallwellen zwischen zwei Wandlern durchgeführt werden, wobei die Schallwelle zumindest einen akustischem Impuls enthält, **dadurch gekennzeichnet, dass**

   - die akustischen Impulse bündelweise ausgegeben werden (23),
   - eine Messrate von gültigen Messungen der Laufzeit (24) für ein Bündel als Verhältnis zwischen einer Anzahl von gültigen Messungen der Laufzeit und einer Anzahl von akustischen Impulsen des Bündels berechnet wird, wobei die gültigen Messungen der Laufzeit aus Messungen des Bündels ausgewählt werden und dabei keine Ausreißer berücksichtigt werden,
   - die Anzahl an akustischen Impulsen jedes Bündels (21) für jedes neue Bündel ausgehend von der Messrate von gültigen Messungen der Laufzeit des vorhergehenden Bündels berechnet wird, so dass die Schallwelle je nach Messrate von gültigen Messungen der Laufzeit angepasst wird, die mit einer Geschwindigkeit des Flusses zu einem vorherigen Zeitpunkt zusammenhängt.

2. Verfahren nach Anspruch 1, **dadurch gekennzeichnet, dass** die elektrische Energie zum Erzeugen der Schallwelle je nach Geschwindigkeit des Flusses, insbesondere hinsichtlich Spannung und/oder Strom und/oder Dauer der Impulse angepasst wird (22).

3. Verfahren nach Anspruch 2, **dadurch gekennzeichnet, dass** die elektrische Energie zum Erzeugen der Schallwelle hinsichtlich Spannung je nach Geschwindigkeit des Flusses angepasst wird (22), so dass die Amplitude der akustischen Impulse je nach Geschwindigkeit des Flusses angepasst wird.

4. Verfahren nach einem der vorangehenden Ansprüche, **dadurch gekennzeichnet, dass** die Messung zur Charakterisierung eines Flusses die Messung der Geschwindigkeit des Flusses und/oder der Temperatur des Flusses und/oder der Ausrichtung des Flusses umfasst.

5. Verfahren nach einem der vorangehenden Ansprüche, **dadurch gekennzeichnet, dass** die Amplitude der elektrischen Spannung zum Erzeugen der akustischen Impulse für jedes neue Bündel ausgehend von einer Geschwindigkeit des Flusses berechnet wird (22), die von dem vorherigen Bündel bestimmt wird.

6. Verfahren nach einem der vorangehenden Ansprüche, **dadurch gekennzeichnet, dass** das Verfahren durch Definition einer anfänglichen Spannungsamplitude (26) und einer anfänglichen Anzahl von akustischen Impulsen (27) eingeleitet wird.

7. Verfahren nach einem der vorangehenden Ansprüche, **dadurch gekennzeichnet, dass** der charakterisierte Fluss der Wind ist.

8. Vorrichtung zur Messung durch Schallwellen bei der Charakterisierung eines Flusses zu einem gegebenen Zeitpunkt, enthaltend Sendemittel (1) und Empfangsmittel (2) für Schallwellen und Mittel zum Bestimmen der Laufzeit von Ultraschallwellen zwischen den Sendemitteln (1) und den Empfangsmitteln (2), **dadurch gekennzeichnet, dass**

   - die Sendemittel (1) dazu vorgesehen sind, akustische Impulse bündelweise auszugeben,
   - sie ferner Rechenmittel (3) aufweist, die dazu vorgesehen sind,

   • eine Messrate von gültigen Messungen der Laufzeit für ein Bündel als Verhältnis zwischen einer Anzahl von gültigen Messungen der Laufzeit und einer Anzahl von akustischen Impulsen des Bündels zu berechnen, wobei die gültigen Messungen der Laufzeit aus Messungen des Bündels ausgewählt werden und dabei keine Ausreißer berücksichtigt werden,
   • eine Anzahl an akustischen Impulsen jedes Bündels für jedes neue Bündel ausgehend von der Messrate von gültigen Messungen der Laufzeit des vorhergehenden Bündels zu berechnen, so dass die Schallwelle je nach Messrate von gültigen Messungen der Laufzeit angepasst wird, die mit einer Geschwindigkeit des Flusses zu einem vorherigen Zeitpunkt zusammenhängt.

9. Vorrichtung nach Anspruch 8, **dadurch gekennzeichnet, dass** die Sendemittel (1) und die Empfangsmittel (2) für Schallwellen drei Sender/Empfänger für Schallwellen (4) aufweisen.

10. Vorrichtung nach Anspruch 9, **dadurch gekennzeichnet, dass** die drei Sender/Empfänger für Schallwellen (4) abstandsgleich in einer gleichen Messebene liegen.

11. Vorrichtung nach Anspruch 9 oder 10, **dadurch gekennzeichnet, dass** sie einen Dreizack (5) aufweist, der sich aus drei Zacken (6) zusammensetzt, die fest mit einem Körper (7) verbunden sind, wobei ein freies Ende (9) eines jeden Zackens einen Sender/Empfänger für Schallwellen trägt.

12. Vorrichtung nach einem der Ansprüche 8 bis 11, **dadurch gekennzeichnet, dass** die Rechenmittel (3) eine elektronische Einrichtung und/oder einen Computer aufweisen.

**Claims**

1. Measurement method using an acoustic wave for characterizing a flow at a given moment, using time-of-flight determinations of ultrasonic waves between two transducers, in which the acoustic wave comprises at least one acoustic pulse, **characterized in that**

   - the acoustic pulses are emitted (23) in bursts,
   - a rate of valid time-of-flight (24) measurements for a burst is calculated as the ratio between a number of valid time-of-flight measurements and a number of acoustic pulses of the burst, the valid time-of-flight measurements being selected from the measurements of the burst, disregarding outliers,
   - the number of acoustic pulses in each burst (21) is calculated for each new burst based on the rate of valid time-of-flight measurements of the preceding burst so as to adapt the acoustic wave depending on the rate of valid time-of-flight measurements linked to the speed of said flow at a preceding moment.

2. Method according to claim 1, **characterized in that** the electrical energy for generating the acoustic wave, more particularly the voltage and/or current and/or duration of the pulses, is adapted (22) depending on the speed of the flow.

3. Method according to claim 2, **characterized in that** the voltage (22) of the electrical energy for generating the acoustic wave is adapted depending on the speed of the flow, so as to adapt the amplitude of the acoustic pulses depending on the speed of the flow.

4. Method according to one of the preceding claims, **characterized in that** the measurement for characterizing a flow comprises measurement of the speed of the flow and/or the temperature of the flow and/or the orientation of the flow.

5. Method according to one of the preceding claims, **characterized in that** the amplitude of the electrical voltage for generating acoustic pulses is calculated (22) for each new burst based on a flow speed determined by the preceding burst.

6. Method according to one of the preceding claims, **characterized in that** the method is initialized by defining an initial voltage amplitude (26) and an initial number of acoustic pulses (27).

7. Method according to one of the preceding claims, **characterized in that** the characterized flow is the wind.

8. Measuring device using an acoustic wave for the characterization of a flow at a given moment, comprising means for transmitting (1) and means for receiving (2) an acoustic wave and means for determining the time-of-flight of ultrasonic waves between the means for transmitting (1) and the means for receiving (2), **characterized in that**

   - the means for transmitting (1) are arranged so as to transmit acoustic pulses in bursts
   - it comprises moreover calculating means (3) which are arranged for

     ○ calculating a rate of valid time-of-flight measurements for a burst as the ratio between a number of valid time-of-flight measurements and a number of acoustic pulses of the burst, the valid time-of-flight measurements being selected from the measurements of the burst, disregarding outliers,
     ○ calculating the number of acoustic pulses in each burst for each new burst based on the rate of valid time-of-flight measurements of the preceding burst so as to adapt the acoustic wave depending on the rate of valid time-of-flight measurements linked to the speed of said flow at a preceding moment.

9. Device according to claim 8, **characterized in that** the means of transmitting (1) and the means of receiving (2) the acoustic wave comprise three acoustic wave transceivers (4).

10. Device according to claim 9, **characterized in that** the three acoustic wave transceivers (4) are equidistant in the same measurement plane.

11. Device according to claim 9 or 10, **characterized in that** it comprises a trident (5) consisting of three integral prongs (6) of a body (7), a free end (9) of each prong bearing an acoustic wave transceiver.

**12.** Device according to one of claims 8 to 11, **characterized in that** the calculating means (3) comprise an electronic device and/or a computer.

FIG. 1

FIG. 2

FIG. 3

## RÉFÉRENCES CITÉES DANS LA DESCRIPTION

**Documents brevets cités dans la description**

- US 20040267464 A

- US 5343744 A

**Littérature non-brevet citée dans la description**

- **CRUETTE, D. ; A. MARILLIER ; J. L. DUFRESNE ; J. Y. GRANDPEIX.** Fast temperature and true airspeed measurements with the airborne ultrasonic anemometer thermometer. *American Meteorological society,* 2000, 1021-1039